# EUROPÄISCHE PATENTANMELDUNG

(11) **EP 0 779 174 A2**
(43) Veröffentlichungstag der Anmeldung: **18.06.1997**
(21) Anmeldenummer: 96120174.6
(22) Anmeldetag: 16.12.1996
(51) Int. Cl.: B60N 2/06

(54) **Sitzlängsverstellung**

(30) Priorität: 15.12.1995 DE 19547034
(71) Anmelder: Johnson Controls/ Naue Engineering GmbH, 42929 Wermelskirchen (DE)
(72) Erfinder: Klopp, Rita, D-42447 Radevormwald (DE); Mildt, Helmut, D-51789 Lindlar/Schmitzhöhe (DE)
(74) Vertreter: Bergen, Klaus, Dipl.-Ing.

(57) **Zusammenfassung**

Um eine Vorrichtung zum Ausgleich von Bautoleranzen von in Kraftfahrzeugen eingebauten Längsverstelleinrichtungen zu schaffen, wird eine Sitzverstellung mit mindestens einer fest mit dem Boden verbundenen Führungsschiene (1; 2), mindestens einem direkt oder indirekt mit dem Sitz (5) verbundenen, mit der Führungsschiene (1; 2) zusammenwirkenden Wälzkörper (14, 16, 18 bzw. 15, 17, 19) und einer mindestens einseitigen Loslagerung (22) vorgeschlagen.

## Beschreibung

Die Erfindung bezieht sich auf eine Vorrichtung zum Ausgleichen der fertigungsbedingten Toleranzen zwischen einer ersten und einer zweiten Führungsschiene eines Führungsschienenpaares für die Längsverstellung von Kraftfahrzeugsitzen.

Bekannt ist eine Einrichtung für den Spielausgleich aus der DE 16 80 269 A1, bei der an der Schwellerseite und an der Tunnelseite, in Figur 2 auch in der Mitte des Fahrzeugbodens, angebrachte Führungsschienen die Verstellung eines Fahrzeugsitzes in Richtung der Fahrzeuglängsachse ermöglichen.

Die Schwellerseite ist die Seite des Fahrzeugs, an der die Fahrzeugtüren angeschlagen sind, wobei der Schweller den unteren Bereich der Einstiegsöffnung darstellt. Der Tunnel verläuft in der Regel in der Mitte des Fahrzeuginnenraumes in Richtung der Fahrzeuglängsachse und wirkt als das tragende Ruckgrat des Fahrzeugunterbaues, wobei in ihm u.a. die Kraftübertragungsorgane untergebracht sein können.

Bei der bekannten Einrichtung ist eine erste Laufschiene derart ausgebildet, daß sie eine Verschiebung des Sitzes zur Fahrzeugquerachse nicht zuläßt, während eine zweite Laufschiene Bewegungen in der Fahrzeugquerachse erlaubt.

Aus der DE 39 20 077 A1 ist eine weitere Einrichtung zum Ausgleich des aus Bautoleranzen resultierenden Spiels bekannt. Bei dieser Ausführung werden die auftretenden Toleranzen mittels eines mit einem Kraftspeicher belasteten Bolzens ausgeglichen, der mit einer Spanneinrichtung zusammenwirkt.

In der DE 43 30 133 A1 wird eine Vorrichtung zum Toleranzausgleich beschrieben, bei der insbesondere das Verkanten der Gleitelemente bei zu viel Spiel zwischen den Führungen bzw. bei nicht parallel zueinander verlaufenden Führungsschienen und den darin sich bewegenden Gleitelementen verhindert werden soll.

Alle Führungseinrichtungen haben das gemeinsame Problem, daß nicht kontrollierbare Reibungswiderstände zu einer unkomfortablen Benutzung, im Extremfall zum Blockieren durch starkes Verkanten der Verstelleinrichtung führen. Dies ist insbesondere dann zu beobachten, wenn sich der Sitz über die gesamte innere Breite des Fahrzeuginnenraumes erstreckt, also ein sehr ungünstiges Verhältnis von Sitzführungslänge zur Sitzbreite vorhanden ist. Für das möglichst störungsfreie Funktionieren der Verstelleinrichtung ist eine ständige Schmierung der Gleitelemente notwendig oder sind aufwendige Beschichtungen der gleitenden Teile erforderlich, will man auf eine herkömmliche Schmierung verzichten.

Dadurch, daß sich im Boden des Innenraumes ständig Staub und Schmutz ansammelt, vermischt sich dieser mit dem Schmiermittel, das sich in den Führungsschienen befindet, womit eine Änderung des Gleitwiderstandes einhergeht. Eine ähnliche Wirkung verursacht der Abrieb des Oberflächenschutzes der Führungsschienen und sein Vermischen mit dem Schmiermittel, da sich die vor dem Lackiervorgang der Karosserie angebrachten Führungsschienen nicht wirtschaftlich gegen den Lack abdecken lassen und somit mitlackiert werden müssen. Durch die unterschiedlichen Gleitwiderstände, etwa zwischen der an der Tunnelseite montierten und der an der Schwellerseite montierten Führungsschiene, ist ein Verkanten des Sitzes beim Verstellen möglich, was für das Einstellen des Sitzes ein erhebliches Erschwernis darstellt.

Aufgabe der Erfindung ist es, eine Vorrichtung zum Ausgleich von Bautoleranzen von in Kraftfahrzeugen eingebauten Langsverstelleinrichtungen zu schaffen, die die Probleme bekannter Spielausgleichsvorrichtungen beseitigt. Die erfindungsgemäße Lösung ist im Patentanspruch 1 angegeben und wird am Beispiel einer erfindungsgemäßen Vorrichtung im folgenden erläutert. In den Zeichnungen zeigen:
- Fig. 1:: eine erfindungsgemäße Sitzlängsverstellung in teilweise geschnittener Stirnansicht; und
- Fig. 2: die Verstellung gemäß Fig. 1 in Seitenansicht.

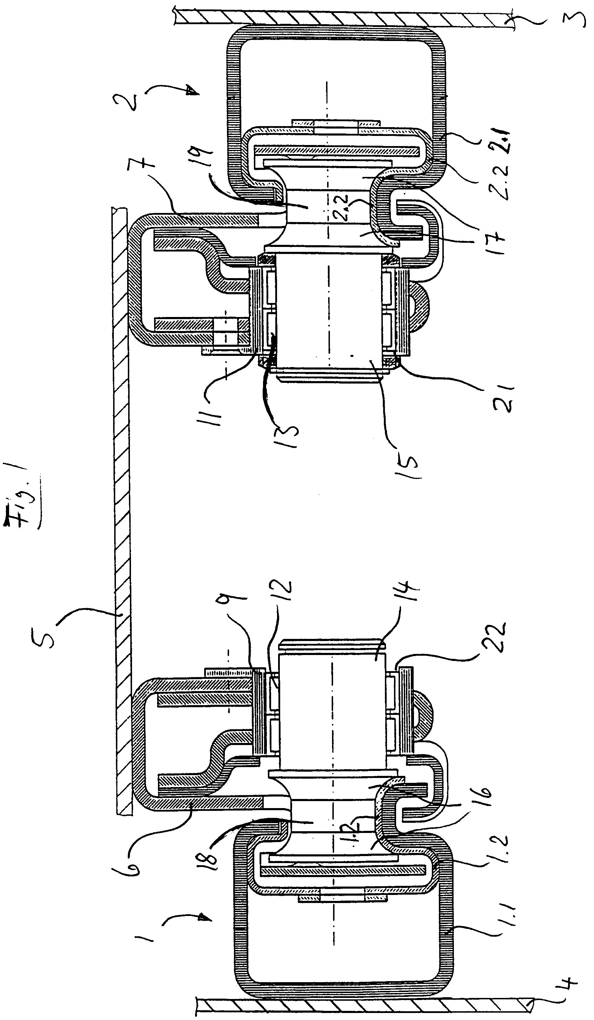

Für die Langsverstellung der Sitze in einem Kraftfahrzeug ist dieses mit Führungsschienen - im dargestellten Ausführungsbeispiel gemäß Fig. 1 mit zwei Führungsschienen 1 und 2 - ausgestattet, die im Fußraum in Längsrichtung zur Fahrzeugachse zum einen an der Schwellerseite 3 und zum anderen an dem in der Mitte des Fahrzeugs verlaufenden Tunnel 4 angebracht sind. Ideal wäre für ein problemloses Funktionieren der Längsverstellung des Sitzes, wenn die Führungsschienen 1 und 2 genau parallel zueinander und in gleichen Ebenen verliefen. Dieser Idealzustand ist aufgrund der Maßabweichungen der Bauteile des Fahrzeugbodens und des Sitzes bei einer Serienfertigung nicht zu erreichen.

Jede Führungsschiene 1 und 2 der erfindungsgemäßen Vorrichtung besteht aus mindestens zwei miteinander verschachtelten Metallprofilen 1.1 und 1.2 bzw. 2.1 und 2.2, wobei das jeweilige Außenprofil 1.1 bzw. 2.1 aus vergleichsweise dickwandigem Material der Aufnahme der hohen Belastungen dient, die auf den Sitz 5 und damit seine Führung einwirken, und das jeweilige Innenprofil 1.2 bzw. 2.2 aus vergleichsweise dünnwandigem Material, das von dem jeweils zugeordneten Außenprofil 1.1 bzw. 2.1 umfaßt ist, für die eigentliche Führung des Sitzes vorgesehen ist. Das dünnwandige Führungsprofil 1.2 bzw. 2.2 ist mit dem jeweils zugeordneten dickwandigen Halteprofil 1.1 bzw. 1.2 fest verbunden; beide so ineinandergefügten Profile sind jeweils über ihre Außenprofile 1.1 und 2.1 an den erwähnten Stellen der Fahrzeugkarosserie fixiert.

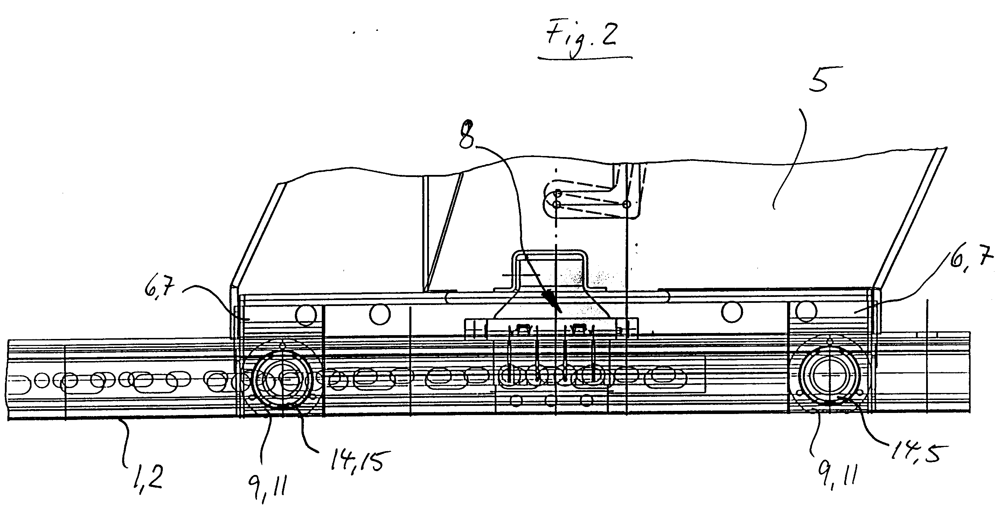

An der im Ausführungsbeispiel andeutungsweise gezeigten Basis des Fahrzeugsitzes 5 sind in Längsrichtung beidseitig in einem Abstand verlaufende Träger 6 und 7 mit dem Boden des Sitzes 5 unterseitig fest verbunden angebracht. Diese Träger 6 und 7 bieten zum einen einer in Fig. 2 schematisch dargestellten Verriegelungsvorrichtung 8 festen Halt und weisen zum anderen an ihren Endabschnitten quer zur Verschieberichtung des Sitzes angebrachte Lageraugen 9 bzw. 11 auf. Mittels geeigneter reibungsmindernder Lagermittel, vorzugsweise, wie im Ausführungsbeispiel angedeutet, mittels Wälzlagern 12 bzw. 13, ist in den Lageraugen jeweils ein zylinderförmiger Rollkörper 14 bzw. 15 drehbar gelagert. Einstückig mit jedem zylinderförmigen Rollkörper 14, 15 und auf derselben Rotationsachse ist ein annähernd einem Doppelkegelstumpf gleichender, profilierter Rollkörper verbunden, wobei dessen Kegelstumpfflächen 16 bzw. 17 mit ihrem kleineren Durchmesser einander gegenüberliegen und ihrerseits durch einen zylinderförmigen Teil 18 bzw. 19 verbunden sind, so daß sich aus dieser Formgebung gewissermaßen eine Spurrolle ergibt. Wie Fig. 2 zeigt, sind auf jeder Sitzlängsseite zwei derartige Spurrollen angeordnet, und zwar jeweils eine im vorderen und eine im hinteren Bereich. Diese aus dem zylinderförmigen Rollkörper 18 bzw. 19 und den profilierten, annähernd doppelkegelstumpfförmigen Rollkörpern 16 bzw. 17 einstückig ausgeführten Spurrollen sind an der einen Sitzseite - hier auf der Schwellerseite 3 - in Festlagern 21 und auf der anderen Sitzseite - Tunnelseite 4 - in Loslagern 22 um ihre Rotationsachse drehbar gelagert. Dem Fachmann sind die Begriffe Fest- und Loslager bekannt und bedürfen daher nicht der besonderen Erläuterung.

Beim Einbau des Sitzes in das Fahrzeug werden die Spurrollen mit ihren nach außen weisenden Spurrändern in die schweller- und tunnelseitig angebrachten Führungsschienen eingeführt, womit der Fahrzeugsitz in seiner Längsrichtung gelagert ist und verschoben werden kann.

Durch die auf der einen Sitzseite angebrachte feste Lagerung 21 der Rollvorrichtung ist eine Querbewegung des Sitzes 5 gegenüber der fahrzeugseitig angebrachten Führungsschiene 2, in der die Rollvorrichtung geführt wird, nicht bzw. nur in einem sehr geringen Maße, nämlich nur soweit möglich, wie es der Führungsspalt der Führungsschiene 2 dem doppelstumpfförmig profilierten Rollkörper 17, 19 erlaubt, eine Querbewegung zu vollführen.

Die auf der anderen Sitzseite axial verschieblich lose gestaltete Lagerung 22 der Spurrollen 16, 18 erlaubt es, Differenzen im Abstand der Führungsschienen zueinander in hohem Maße leicht auszugleichen, ohne daß sich der Führungsmechanismus in irgendeiner Weise verklemmt. Ebenso wie Abstandsfehler der Führungsschienen 1, 2 zueinander keinen Einfluß auf die leichtgängige Funktion der Verstellung haben, lassen sich auch Fehler in der Neigung der Führungsschienen zueinander ausgleichen. Durch die ballige Ausgestaltung der Laufflächen 1.2 und 2.2 der Führungsschienen 1 bzw. 2 und der nach innen gewölbten Lauffläche der Spurrollen 16 bzw. 17 (s.Fig. 1) ist zwischen beiden Flächen lediglich eine Punktberührung vorhanden, wodurch auch beim Verspannen der Rollvorrichtung durch Schieflage der Führungsschienen 1, 2 zueinander immer ein leichtes Verschieben des Sitzes 5 möglich ist, weil der Rollwiderstand auf ein sehr geringes Maß beschränkt bleibt.

Durch geeignete, hier nicht dargestellte Verkapselungen der sich drehenden Teile ist eine Gewähr für eine langlebige, verschleißfreie Funktion der Rolleinrichtung gegeben. Durch die drehbar gelagerten Spurrollen kann auf eine Schmierung der Führungsschienen verzichtet werden, wodurch sich das Problem von Funktionsstörungen, die aus der Verschmutzung resultieren, nicht mehr stellt. Staub- und Schmutzteile können sich zwar auf den gewölbten Führungsschienen ablagern, werden aber entweder bei ausreichender Korngröße beim Verstellen des Sitzes von der gewölbten Oberfläche fallen oder durch die hohe punktförmige Auflagelast der Spurrollen auf der gewölbten Oberfläche zermahlen und kommen somit für eine Beeinträchtigung der Funktion nicht in Betracht.

Durch die aus den geringen Rollwiderständen zwischen Führungsschiene und Spurrollen resultierende Leichtgängigkeit ist eine gute Einhandbedienung der Längsverstellvorrichtung gegeben. Der Sitz kann mit Leichtigkeit nach seinem Entriegeln mit einer Hand in eine andere Position gebracht werden, was insbesondere von Vorteil ist, wenn der Raum hinter dem Sitz erreicht werden soll. Da bei dieser Vorrichtung ein Verkanten nicht vorkommt, eignet sich die Verstellvorrichtung insbesondere für die Verstellung von Sitzen, die eine Ausdehnung über die gesamte Breite des Innenraumes des Fahrzeugs aufweisen.

Nach dem Positionieren des Sitzes in seiner Längsposition wird dieser durch die Verriegelungsvorrichtung 8 in der gewählten Position fixiert. Beim Verriegeln werden die Spurrollen 16, 18 bzw. 17, 19 der Rollvorrichtung derart auf die zugehörige ballige Lauffläche 1.2 bzw. 2.2 der Führungsschienen gedrückt, daß das gesamte noch vorhandene Spiel zwischen Führungsschiene und Rollvorrichtung herausgedrückt ist und der Sitz klapperfrei in seiner Längsposition gehalten wird. Dies ist besonders bei nicht besetztem Sitz notwendig, da ansonsten durch die Fahrzeugschwingungen störende Geräusche durch Spiel in den Führungsschienen entstehen könnten.

## Patentansprüche

1. Sitzverstellung, insbesondere für Kraftfahrzeuge, mit
- mindestens einer fest mit dem Boden verbundenen Führungsschiene (1;2),
- mindestens einem direkt oder indirekt mit dem Sitz (5) verbundenen, mit der Führungsschiene (1;2) zusammenwirkenden Wälzkörper (14, 16, 18 bzw. 15, 17, 19), und
- einer mindestens einseitigen Loslagerung (22).

2. Verstellung nach Anspruch 1, gekennzeichnet durch zwei in am Sitz (5) befestigten Trägern (6, 7) gelagerte Wälzkörperpaare (14, 16, 18 bzw. 15, 17, 19), denen jeweils eine Führungsschiene (1 bzw. 2) zugeordnet ist.

3. Verstellung nach Anspruch 1 oder 2, dadurch gekennzeichnet, daß jeder Wälzkörper zueinander geneigte Abwälzflächen (16 bzw. 17) aufweist.

4. Verstellung nach Anspruch 3, dadurch gekennzeichnet, daß jeder Wälzkörper aus einer Zylinder-Doppelkegelstumpf-Kombination (18/16 bzw. 19/17) besteht.

5. Verstellung nach Anspruch 4, gekennzeichnet durch eine zylindrische Lauffläche (18 bzw. 19) zwischen den mit ihren kleineren Durchmessern einander zugekehrten Kegelstümpfen (16 bzw. 17) (Spurrolle).

6. Verstellung nach einem der Ansprüche 3 bis 5, dadurch gekennzeichnet, daß zumindest die geneigten bzw. Kegelflächen (16, 17) hyperbolisch (konkav) verlaufen.

7. Verstellung nach einem der Ansprüche 1 bis 6, gekennzeichnet durch eine koaxial zum Doppelkegel mit diesem verbundenen, zylindrischen Rollkörper (14, 15) zur drehbaren Lagerung in den Trägern (6 bzw. 7).

8. Verstellung nach einem der Ansprüche 1 bis 7, dadurch gekennzeichnet, daß auf einer Sitzseite die Rollkörper in Loslagern (22) und auf der anderen in Festlagern (21) gelagert sind.

9. Verstellung nach einem der Ansprüche 1 bis 8, dadurch gekennzeichnet, daß jede Führungsschiene (1, 2) aus zwei ineinandergeschachtelten Profilen (1.1, 1.2 bzw. 2.1, 2.2) unterschiedlicher Wandstärken besteht.

10. Verstellung nach einem der Ansprüche 1 bis 9, gekennzeichnet durch eine ballige Auflager-, Halte- und Führungsfläche der Führungsschienen.

11. Verstellung nach Anspruch 10, dadurch gekennzeichnet, daß im Bereich der balligen Fläche das dunnwandige Profil (1.2, 2.2) dem dickwandigen (1.1 bzw. 2.1) auf- und anliegt.
